# EUROPEAN PATENT SPECIFICATION

(11) **EP 0 740 892 B1**
(45) Date of publication and mention of the grant of the patent: **07.04.1999**
(21) Application number: 95905714.2
(22) Date of filing: 18.01.1995
(51) Int. Cl.: H04Q 11/00

(54) **INTERCONNECTED PASSIVE OPTICAL NETWORKS**
MITEINANDERVERBUNDENE PASSIVE OPTISCHE NETZWERKE
RESEAUX OPTIQUES PASSIFS INTERCONNECTES

(30) Priority: 18.01.1994 EP 94300347
(43) Date of publication of application: 06.11.1996
(73) Proprietor: BRITISH TELECOMMUNICATIONS public limited company, London EC1A 7AJ (GB)
(72) Inventor: TANDON, Vivek, Ipswich Suffolk IP5 7TB (GB); WILBY, Mark, London WC1E 7JE (GB); SEMOS, Robert, Ernest, Vickers, Kent DA15 7LB (GB)
(74) Representative: Semos, Robert Ernest Vickers
(86) International application number: GB9500088
(87) International publication number: WO9519689

(56) References cited:
- WO-A-92/18890
- JOURNAL OF LIGHTWAVE TECHNOLOGY, vol.11, no.5/6, May 1993, NEW YORK US pages 714 - 732, XP396704 S.B. ALEXANDER ET AL 'A Precompetitive Consortium on Wide-Band All-Optical Networks' cited in the application
- JOURNAL OF LIGHTWAVE TECHNOLOGY, vol.11, no.5/6, May 1993, NEW YORK US pages 937 - 950, XP396723 T.E STERN ET AL 'Linear Lightwave Networks: Performance Issues' cited in the application
- CONFERENCE RECORD, IEEE GLOBAL TELECOMMUNICATIONS CONFERENCE, 2-5 DEC. 1990, VOL. 3 PAGES 1866-1872, SAN DIEGO US, XP218892 T.E. STERN 'Linear Lightwave Networks: how far can they go?' cited in the application
- CONFERENCE RECORD, INTERNATIONAL CONFERENCE ON COMMUNICATIONS, 14-18 JUNE 1992, VOL. 3 PAGES 1173-1179, CHICAGO US, XP337910 S.S. WAGNER ET AL 'Multiwavelength Ring Networks for Switch Consolidation and Interconnection' cited in the application
- PROCEEDINGS, SEVENTH ANNUAL JOINT CONFERENCE OF THE IEEE COMPUTER AND COMMUNICATION SOCIETIES, INFOCOM '88, 29-31 MAR. 1988, PAGES 354-362, NEW ORLEANS US, XP44787 G.R. HILL 'A Wavelength Routing Approach to Optical Communications Networks'
- IEEE JOURNAL ON SELECTED AREAS IN COMMUNICATION, vol.8, no.6, August 1990, NEW YORK US pages 995 - 1004, XP471589 M.S. GOODMAN ET AL 'The LAMBDANET Multiwavelength Network: Architecture, Applications and Demonstrations'

## Description

This invention relates to wavelength management in an optical communications network employing wavelength division multiplexing.

It is known from "A Precompetitive Consortium on Wide-Rand All-Optical Networks", by S B Alexander et al., Journal of Lightwave Technology, Vol. 11, No. 5/6, May 1993, to configure an all-optical network (AON) as a hierarchical tree structure in which a plurality of level-O AONs, having optical terminals and also known as passive optical networks (PONs), are connected to level-1 AONs which in turn are connected to level-2 AONs, Each PON has a fixed frequency-selective local bypass for wavelengths which are pre-allocated for use at level-O, thus enabling the same wavelengths to be used by each PON. To connect with a terminal on a different PON, a terminal must use a wavelength not in the level-O set to reach its associated level-1 AON where the wavelength is routed either to a PON on that level-1 AON or upwards to an associated level-2 AON to reach a PON on a different level-1 AON. Frequency changers may be used in this latter case.

International Application No. ACT/US92/03250 (International Publication No. WO 92/18890) discloses an optical network of nodes and connecting links of pairs of fibres carrying optical signals in opposite directions. Each node comprises an optical switch in the form of a controllable linear divider-combiner (LDC) assembly which under the control of a Network Control Centre performs power dividing and combining for each of the wavebands from a waveband demultiplexer to route signals from an input port to an output port.

The articles "Linear Lightwave Networks: Performance issues" by T E Stern et al., Journal of Lightwave Technology, Vol. 11, No. 5/6, May/June 1993, and "Linear Lightwave Networks: How Far Can They Go?", by T E Stern, Conference Record, IEEE Global Telecommunications Conference, 2-5 December 1990, Vol. 3, pages 1866-1872, also disclose optical nodes employing an LDC as an optical switch performing controllable waveband selective optical signal routing, combining, and splitting. The switch proper comprises controllable power dividers (also known as directional couplers) disposed so that each input port can be controllably connected to any output port. In preferred arrangements there are several switches, each having its input ports connected to the output of a common waveband demultiplexer and its output ports connected to a common waveband multiplexer. In this way, wavelengths in a waveband can be confined to limited regions of a large network, and the waveband can be reused in other parts of the network.

The article "The LAMBDANET Multiwavelength Network: Architecture, Applications, and Demonstrations", by M S Goodman, et al., IEEE Journal on Selected Areas in Communications, Vol. 8, No. 6,August 1990, discloses a plurality of nodes, each of which transmits on a respective wavelength, connected to a star coupler so that each node output is broadcast to each other node. In order to separate the received set of wavelengths a node may use wavelength tunable filters and receivers, or multiple fixed receivers.

The paper "Multiwavelength Ring Networks for Switch Consolidation and interconnection", by S S Wagner et al., Conference Record, International Conference on Communications, 14-18 June 1992, Vol. 3, pages 1173-1179, discloses a plurality of Central Offices (COs) connected by a 2-fibre multiwavelength-ring network. One CO acts as a switch, and each of the other COs sends transmissions to the switching CO on a respective wavelength on both fibres (one clockwise and the other anti-clockwise for protection in case the ring were to be broken). The switching CO receives all wavelengths from the other COs, and retransmits on the corresponding wavelength to the appropriate destination CO, which extracts the incoming message on its associated wavelength and injects an outgoing message on the same wavelength using a dedicated optical add-drop filter. In a variant using an inner pair of fibres for transmission to the Switching CO and an outer pair of fibres for reception from the Switching CO, wavelengths can be pre-allocated for direct connections between COs (i.e. not passing through the switch), these wavelengths being directly coupled at the switching CO from the inner fibres to the outer fibres.

According to a first aspect of the present invention there is provided an optical communications network comprising: a plurality of connected passive optical networks (PONs) in which communication channels between terminals are wavelength multiplexed, at least some of the PONs being arranged to relay an optical signal on an incoming link to each of a plurality of outgoing links; and connection control means for dynamically allocating a first wavelength for a connection from a first terminal connected to a first PON to a second terminal connected to said first PON or to a different PON, and for dynamically controlling respective tunable wavelength filter means on links associated with the PON or PONs having the first and second terminals, and with any intermediate PONs, to block said dynamically allocated wavelength on any such associated link not being a link which is part of the transmission path from the first terminal to the second terminal.

Networks in accordance with the present invention contrast with those of the abovementioned prior art in that they do not employ an optical switch, but have a coupling arrangement for broadcasting each incoming optical signal to each outgoing fibre link and use tunable wavelength filters to block outgoing transmissions from a PON to its neighbouring PONs instead of the prior art arrangement of filters disposed at the receiving node to select the required wavelength from a set of incoming wavelengths. In this way, by appropriate control of the filters, a wavelength can be blocked on certain outgoing links and allowed to pass on a desired link or links whereby only the intended destination PON, or an intermediate PON, receives the transmitted wavelength, and since the wavelength is confined to the PONs and links associated with that connection it can be dynamically re-allocated for use with any other connection which does not involve a common PON. Such a network provides a network controller considerable scope in the establishment of transmission paths for connections and in the selection (including re-use) of the transmission wavelength(s).

In a first preferred network of the first aspect, the connection control means is arranged dynamically to allocate, for said first connection, a second wavelength for transmission from the second terminal to the first terminal, and dynamically to control said respective tunable wavelength filter means on links associated with the PON or PONs having the first and second terminals, and with any intermediate PONs, to block said second dynamically allocated wavelength on any such associated link not being a link which is part of the transmission path- from the second terminal to the first terminal.

In a second preferred network of the first aspect, the PONs are linked serially in address order, each having an outgoing link to each neighbouring PON, the respective tunable filter means associated with links in the direction of increasing PON address order being arranged to block permanently wavelengths allocated, in use, by the connection control means to terminals for transmission to PONs of lower address, the respective tunable filter means associated with links in the direction of decreasing PON address being arranged to block permanently wavelengths allocated to terminals for transmission to PONs of higher address whereby, in use, only the tunable filter means associated with the outgoing links of the respective destination PONs to neighbouring PONs not associated with that connection are controlled to block the respective wavelength.

In such a second preferred network, preferably the connection control means is arranged to allocate for transmission in one direction wavelengths which are spaced and alternate with wavelengths which can be allocated for transmission in the other direction.

Alternatively, the connection control means is arranged to allocate for transmission in one direction wavelengths within a first band, and to allocate for transmission in the opposite direction wavelengths within a second band.

Preferably, the connection control means is arranged to allocate for each connection a pair of wavelengths, each pair being spaced by a constant amount.

According to a second aspect of the present invention there is provided a method of establishing communication between terminals on an optical communications network comprising a plurality of optically linked passive optical networks (PONs) in which communication channels between terminals are wavelength multiplexed and at least some of the PONs being arranged to relay an incoming optical signal to each of a plurality of outgoing links, the method comprising the steps of dynamically allocating a first wavelength for transmission from a source terminal to a destination terminal for a first connection, and dynamically controlling respective tunable wavelength filter means on links associated with the PON or PONs having the source and destination terminals, and with any intermediate PONs, to block said allocated wavelength such that the transmission is confined to the transmission path between the source and destination terminals, thereby enabling said allocated wavelength to be used for a simultaneous connection over a non-overlapping transmission path.

Preferably, there is included the step of dynamically allocating, for said first connection, a second wavelength for transmission from the destination terminal to the source terminal, and dynamically controlling said respective tunable wavelength filter means on links associated with the PON or PONs having the source and destination terminals, and with any intermediate PONs, to block said second allocated wavelength such that the transmissicn from the destination terminal is confined to the transmission path between the source and destination terminals.

Preferably, the PONs are linked serially in address order, and including permanently blocking one wavelength of said first and second allocated wavelengths on each link leading from a PON to a PON of lower address, permanently blocking the other wavelength of said allocated wavelengths on each link leading from a PON to a PON of higher address, selectively blocking the said one wavelength on the link leading from the destination PON to a PON of higher address, and selectively blocking said other wavelength on the link leading from the source PON to a PON of lower address.

There may be included the step of dynamically allocating each further connection having a transmission path overlapping that of the first connection a respective different pair of transmission wavelengths. The lower wavelengths of the pairs may be spaced apart by a predetermined difference, the upper wavelengths being spread apart by the same difference.

Preferably, each pair comprises adjacent wavelengths.

All the lower wavelengths of the pairs may be grouped in one group in wavelength order, the upper wavelengths being grouped in an adjacent group.

Embodiments of communications networks in accordance with the present invention will now be described by way of example with reference to the drawings in which:-
Figure 1 is a schematic diagram of a communications network;
Figure 2 is a schematic diagram of the component parts of a PON forming part of the network of Figure 1:
Figure 3 is a schematic diagram of a modified part of the network of Figure 1:
Figure 4 is a schematic diagram of another modified part of the network of Figure 1;
Figure 5 is a schematic diagram cf one embodiment of an electronically tunable wavelength filter for use in a network of the present invention; and
Figure 6 is a schematic diagram of a part of an alternative embodiment of the filter of Figure 5.

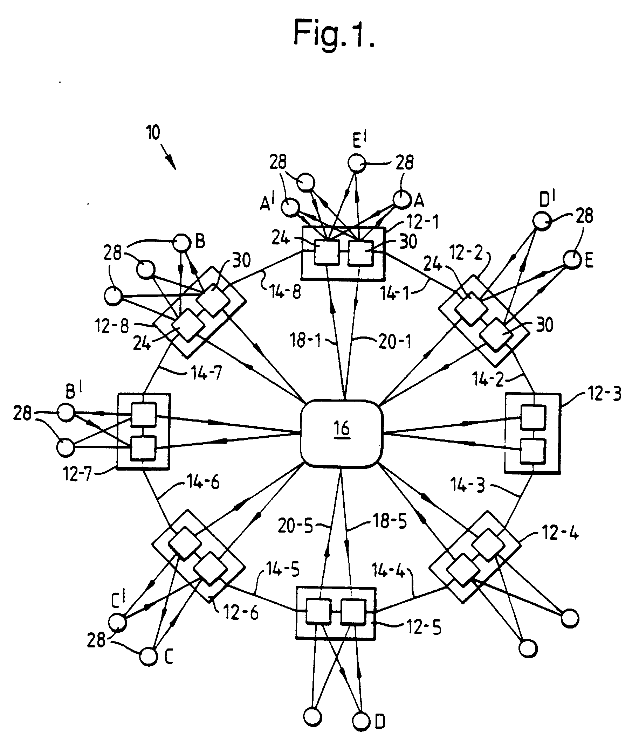

In Figure 1 a communications network 10 in accordance with the present invention comprises thirty one passive cptical networks (PONs), but for convenience only eight PONs 12-1 to 12-8 are shown coupled together in the form of a ring by pairs of optical links 14-1 to 14-8. One link A of pair 14-1 carries signals from PON 12-1 to PON 12-2, i.e. is an outgoing link with respect to PON 12-1, and the other link B of pair 14-1 carries signals in the opposite direction, i.e. is an outgoing link with respect to PON 12-2, and correspondingly for the other pairs 14-2 to 14-8.

Network 10 constitutes a local access network for a public communications network, equivalent to that known as a local exchange and its local exchange lines, and in this context terminals 28 are constituted by telephones and other such telecommunications apparatus, and connections between terminals are generally referred to as calls.

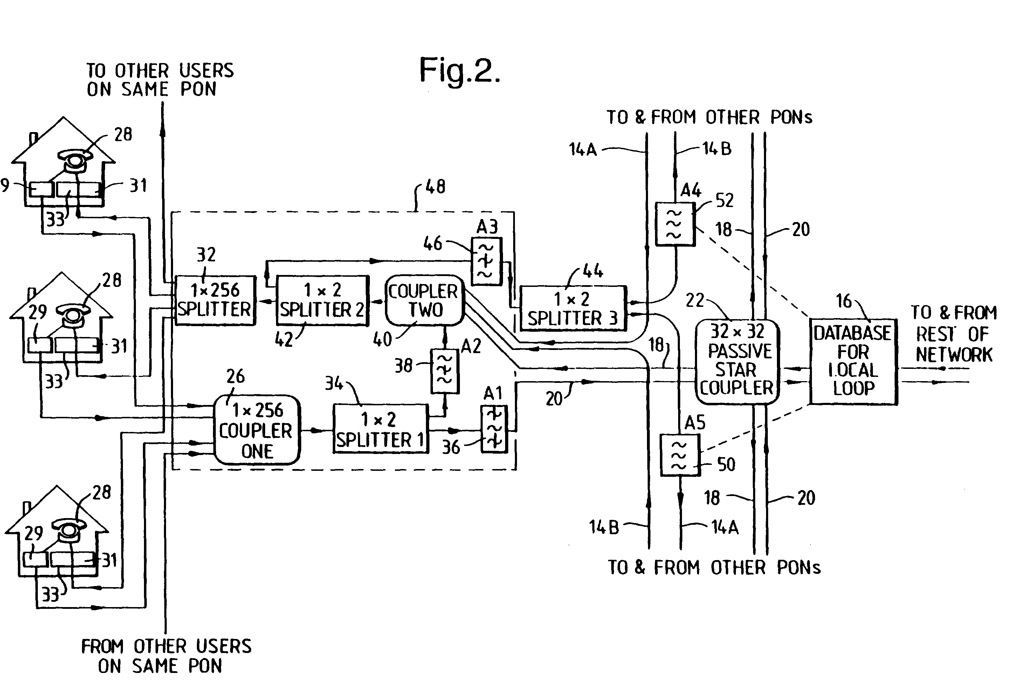

Centrally disposed within the ring of PONs is a wavelength allocation database 16, and each PON communicates with the database 18 via an upstream link 18-1 to 18-8 and a downstream link 20-1 to 20-8, and a passive star coupler 22 (Figure 2).

Within the head-end of each PON 12 is an optical receiving means 24 comprising a 1 x 256 coupler 26 (Figure 2). receiving upstream optical transmissions from all its terminals 28, and an optical transmitting means 30 comprising a 1 x 256 splitter 32 (Figure 2) feeding an optical signal to the downstream links to its terminals 28. The receiving means 24 provides an output to the downstream link 20 and to the transmitting means 30 which itself receives an input from the upstream link 18 and provides outputs to appropriate links to the neighbouring PONs.

The PON 12 is normally fully-loaded with 250 terminals 28, leaving six of the inputs and outputs spare.

Referring now to Figure 2, which shows the component parts of a PON suitable for use in the network 10, the output of coupler 26 feeds a 1 x 2 splitter 34 one output of which is coupled to an input of the star coupler 22 via a wavelength filter or absorber 36 and link 20, and the other output is coupled to a wavelength filter or absorber 38. Filter 38 is designed to pass all wavelengths except a first predetermined wavelength, λ₁, and filter 36 is designed to pass only the first predetermined wavelength, λ₁.

The output of filter 38 feeds into an input of a 1 x 4 coupler 40 whose output feeds the input of a 1 x 2 splitter 42. One output of splitter 42 feeds the input of the splitter 32, and the other output of splitter 42 is coupled to the input of a 1 x 2 splitter 44 via a wavelength filter or absorber 46 which is designed to pass all wavelengths except λ₁ and a second predetermined wavelength, λ₂.

Filters 36 and 38 are integral with the splitter 34, and filter 46 is integral with the splitter 42, although for convenience they are shown as separate in Figure 2. The head-end components 25, 32, 34, 36, 38, 40, 42 and 46 are contained together in a unitary construction 48.

The two outputs of splitter 44 feed respective electronically tunable wavelength filters or absorbers 50 and 52 designed to filter out, i.e. block, wavelengths under the control of the database 16. The filters 50 and 52 feed respective optical fibres 14A and 14B extending in opposite directions to adjacent PONs 12 on the ring, and the corresponding optical fibres 148 and 14A from those adjacent PONs are coupled to inputs of coupler 40, whose fourth input is coupled to an output of the star coupler 22 via link 18.

Each terminal 28 comprises a tunable transmitter 29 having an operating range from 1500nm to 1530nm and which is controllable to generate any one of 200 discrete wavelengths in that range, control circuitry (not shown) responsive to information in a receive status packet from the database to provide the appropriate control signal to the transmitter, a narrow band receiver 31 for continuously monitoring the control channel (λ₁ to detect contention situations, and λ₂ to receive status packets), and a tunable receiver 33 controllable to receive any one of the transmission wavelengths in response to a control signal from the control circuitry.

In an alternative embodiment wherein the tunable receiver 33 is able to step from one received wavelength to another in a few nanoseconds, the separate narrowband receiver 31 is omitted and its function is provided by the tunable receiver 33.

When a terminal, say A on PON 12-1, wishes to communicate with another terminal on the ring, say A' on PON 12-1, it sends a call set-up request on wavelength λ₁ to the database 16. This request is short, less than 1 x 10⁻⁴ sec, and comprises address fields for the source and destination terminals, and corresponding fields for the transmission wavelengths to be used by the terminals, which latter fields are initially empty.

The call set-up request travels via coupler 26, splitter 34, and filter 36 to star coupler 22, and thence to database 16 and all other terminals. Each terminal operates a contention protocol so that if another terminal wishes to send a call set-up request to the database, it will wait until completion of the current call set-up request. However, if that other terminal has already sent its own call set-up request, the terminals and the database can detect that two (or more) requests are present on the network at the same time. The database will ignore overlapping requests, and the terminals will repeat their requests after respective random delays in accordance with the contention protocol, as is known in the art.

Upon receipt of a request, the database 16 will allocate a pair of wavelengths, λ₃ and λ₄, making an entry that these wavelengths have been allocated for communication between the two terminals. The same pair of wavelengths can be used for further calls provided that their transmission paths are kept separate so that there is no overlapping portion.

The database 16 will enter the identities of λ₃ and λ₄ in the fields of the call set-up request and transmit the modified request to the star coupler 22 at wavelength λ₂, Thus source terminal A will know that it is to transmit at λ₃, and destination terminal A' will know that it is to transmit at λ₄.

The database 16 keeps a record of the current usage of all wavelengths, other than the pair used for the control and status packets, for each of the PONs of the network. Thus for a proposed call between PON 1 and PON 3, the database will check whether for the first pair of transmission wavelengths, say λ₃ and λ₄, there is a set "use" flag for λ₃ in any of the locations L₃₋₁ to L₃₋₃ corresponding to PONs 1 to 3 and λ₃. If there is no such flag, the database will allocate that pair, setting the flag in location L₃₋₁ and in location L₄₋₃.

If any of the locations L₃₋₁ to L₃₋₃ had contained a set flag, the database would have proceeded to perform the same check for the next pair, and so on.

In the general case, where a call is being set up between terminals on PONs a and b, a being lower in numerical value than b, the database will determine the shortest route between PON a to PON b so as to maximise re-use of λ₃ and λ₄ for other potential calls cn the network. For a small network of PONs in a ring with no additional links between non-adjacent PONs, this will be a simple matter of comparing the values of (b-a) and (a + N-b), where N is the number of PONs in the ring, to determine whether the shorter path is via PON a+1 etc, or via PON b+1 etc. For example, a call between PONs 3 and 8, the first value will be 5, and the second value will be 3. Therefore, the shorter route will be via PONs 1 and 2, treating PON 1 as PON (8+1).

When a call is established, the database will set the use flag for every PON through which the optical signals pass. Thus for a call between PONs 3 and 8 via PONs 1 and 2, all those PONs will have their flags set so as to prevent the allocation of λ₃ and λ₄ for any further call involving any of those PONs. If there is an addition link between PONs 3 and 8 then only these two PONs will have their flags set. It is only necessary to have one use flag for the pair of wavelengths, but, if desired, there can be respective use flags for λ₃ and λ₄.

For "local" calls, i.e, between two terminals on network 10, wavelengths in the window 1500nm to 1530nm are used. With a spacing of 0.15nm, 200 wavelengths are available which are grouped in pairs, say λ₁ λ₂, λ₃ λ₄, up to λ₁₉₉ λ₂₀₀.

A transmission protocol is used which provides that the lower of an allocated pair of wavelengths will be transmitted around the ring in the direction from the lower network address terminal to the higher network address terminal, in number order, i.e. clockwise from PON 12-1 to PON 12-2, as seen in Figure 1, but not from PON 12-1 to PON 12-8, and correspondingly in the opposite direction for the other wavelength of the pair. Thus for a call between a terminal on PON 12-1 to a terminal on PON 12-8, the database will allocate the lower wavelength to the terminal on PON 12-8.

The protocol thus determines that all filters 52 can permanently filter out the wavelengths λ₃, λ₅, λ₇ etc, and all filters 50 can permanently filter out the wavelengths λ₄, λ₆, λ₈ etc. Thus when a terminal transmits onto the ring, the optical signals can proceed only in one direction, that direction depending on which wavelength of the pair is being used.

The database, which constitutes a connection control means of the present invention, will send controlling signal to the relevant filter 50 or 52 at the PON having the destination terminal to filter out the transmitted wavelength and thus confine the wavelength to that transmission path between the communicating terminals.

Where communicating terminals are on the same PON, as are terminals A and A', filter 50 at that PON is controlled to filter out λ₃ and filter 52 is controlled to filter out λ₄, thus confining those wavelengths to that PON.

In this embodiment, a pair comprises neighbouring wavelengths of the group of 200 wavelengths, so that filters 50 are tunable to filter selectively the wavelengths λ₃, λ₅ etc; and correspondingly for filters 52. Thus adjacent selectable wavelengths to be filtered are spaced by 0.30nm.

In an alternative embodiment where technology permits the selectable wavelengths to be spaced by 0.15nm, the protocol is modified such that instead of the wavelengths for call set-up being λ₁ and λ₂, and call pairs being λ₃ and λ₄, etc, the call set-up pair comprises λ₁ and λ₁₀₁, and the call pairs are λ₂ and λ₁₀₂, λ₃ and λ₁₀₃, etc. This means that filter 50 is controlled to select λ₂ to λ₁₀₀ and is designed permanently to filter out λ₁₀₁ to λ₂₀₀, and filter 52 correspondingly is controlled to select λ₁₀₂ to λ₂₀₀ and is designed permanently to filter out λ₂ to λ₁₀₀. By this means, where say a terminal on PON 12-1 communicates with a terminal on PON 12-2, the terminal with the lower network address will know that it has to transmit on the lower of the two allocated wavelengths λₓ and receive on the higher, λ₁₀₀₊ₓ, and correspondingly for the other terminal. The database can effectively provide the identities of the two transmission wavelengths by giving the identity of say one wavelength, say λₓ, together with an indication of whether the lower addressed terminal will transmit on the lower wavelength (a Normal flag set, say) or, where the call involves the link between PON 12-1 and PON 12-8 (i.e. the highest numbered PON), the higher addressed terminal will transmit on the lower wavelength (the Normal flag not set). In another embodiment, filters 50 and 52 filter out λ₁ and λ₁₀₁, respectively, either permanently or under control of the database, and filter 46 is omitted.

In Figure 1, by appropriate control of the filters 50 and 52 of the relevant terminals, independent calls exist at λ₃ and λ₄ for pairs of terminals BB', CC', and DD'. However, for the call between terminal E on PON 12-2 and terminal E' on PON 12-1 the database will have allocated a different pair of wavelengths λ₅ and λ₆. For the call between terminal E on PON 12-2 and terminal E' on PON 12-1, filter 52 of PON 12-1 is controlled to filter out λ₆ (it permanently filters out λ₆), filter 50 of PON 12-1 permanently filters out λ₆, filter 52 of PON 12-2 permanently filters out λ₅, and filter 50 of PON 12-2 is controlled to filter out λ₅ (it permanently filters out λ₆). This confines the wavelengths to the selected transmission path between the terminals including the optical links between adjacent PONs. It will be appreciated that only two tunable filters need to be controlled by the database, one for each direction of transmission so as to stop the transmitted signal from passing beyond the destination PON.

For the call between terminal D on PON 12-5 and terminal D' on PON 12-2, only filter SO of PON 12-5 is controlled by the database 16 to filter out λ₃ and prevent that wavelength from reaching PON 12-6, and only filter 52 of PON 12-2 is controlled by the database 16 to filter out λ₄ and prevent that wavelength from reaching PON 12-1. All filters 50 permanently filter out λ₄ and all filters 52 permanently filter out λ₃.

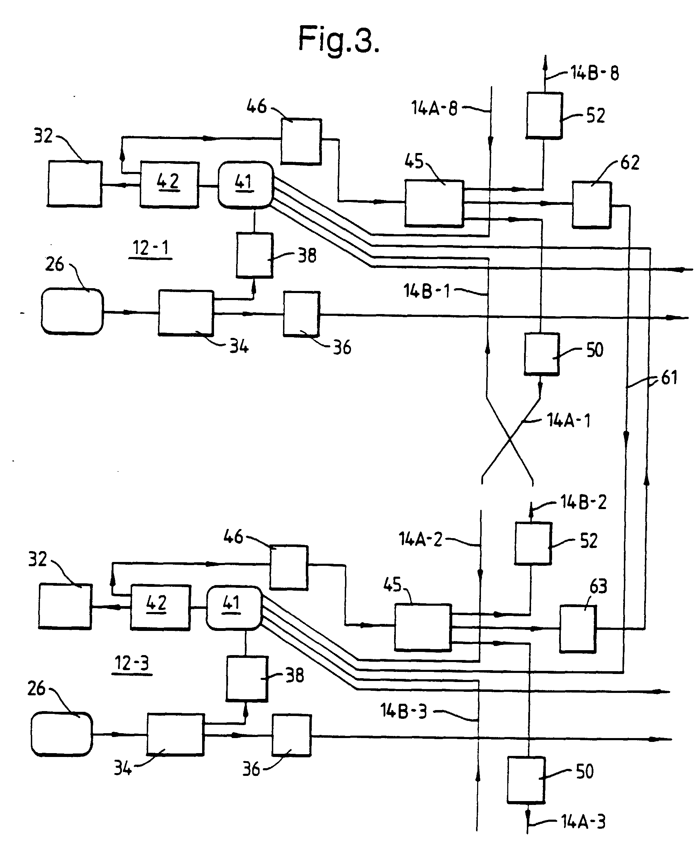

If there is a large amount of traffic between, say, terminals on PON 12-1 and terminals on PON 12-3 and all available wavelengths are in use, the terminals on PON 12-2 cannot make any calls, but terminals on PONs 12-4 to 12-8 can communicate between themselves because wavelengths can be reused over non-lapping paths. Where such a situation is identified an additional pair of fibres 61 is connected between PONs 12-1 and 12-3 as shown in Figure 3 in which splitter 44 is replaced by a 1 x 3 splitter 45, and coupler 40 is replaced by a 1 x 5 coupler 41, then splitter 45 of PON 12-1 is coupled by an optical fibre to coupler 41 of PON 12-3 via a filter 62, and splitter 45 of PON 12-3 is similarly coupled to coupler 41 of PON 12-1 via a filter 63.

If a terminal on PON 12-1 is communicating at λ₇ via fibres 61 with a terminal transmitting at λ₈ on PON 12-3, then in this case filters 50 of PONs 12-1 and 12-3 are controlled to filter out λ₇, filters 52 of PONs 12-1 and 12-3 are controlled to filter out λ₈. Filter 63 of PON 12-3 filters out λ₇ (and all lower wavelengths of pairs to be used for communication between PONs 12-1 and 12-3) and filter 62 of PON 12-1 filters out λ₈ (and corresponding all upper wavelengths). Where communication via fibres 61 is in the range 1500nm to 1530nm, terminals on PON 12-2 can communicate between themselves at the same wavelengths but transmission would not be permitted to pass out of PON 12-2 and interfere with reception at PONs 1 2-1 and 12-3.

Alternatively, this direct communication between PONs 12-1 and 12-3 is in a separate window say 1530nm to 1565nm. For such an arrangement it will be appreciated that an additional filter 63 will be associated with filter 50 of PONs 12-1 and 12-3 to filter out the lower wavelengths, and an additional filter 62 will be associated with filters 52 of PONs 12-1 and 12-3 to filter out the upper wavelengths.

Considering now a full-size ring of 31 PONs, one way of overcoming the transmission loss through the PONs would be to have optical amplifiers spaced around the ring at, for example, the links between PONs 3 and 4, 7, and 8, 11 and 12, 16 and 17, 21 and 22, 26 and 27, 30 and 31.

The number of optical amplifiers required around the ring is dependent upon the gain of each amplifier and the loss through the PONs. The greater the optical gain, the more PONs between amplifiers. If desired, a larger number of lower gain amplifiers can be arranged around the ring.

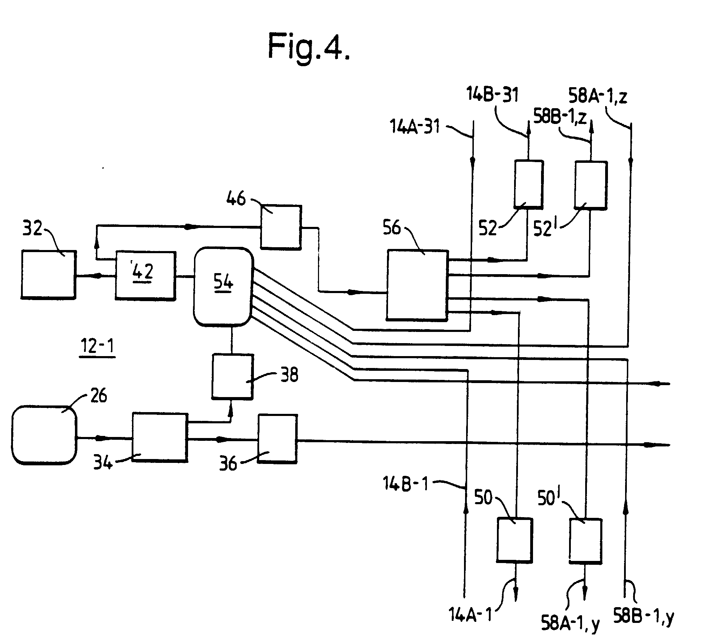

In alternative embodiments, additional optical links 58 are provided between non-adjacent PONs. Where a PON terminates a single additional link then it will have components as shown in Figure 3, link 61 being equivalent to a link 58, and where it terminates two additional links it will have the components as shown in Figure 4 which differ from the Figure 3 arrangement in that coupler 41 has been replaced by a 1 x 5 coupler 54, splitter 45 has been replaced by a 1 x 4 splitter 56, link 58A-1 feeds the signal from one of the outputs of splitter 56 via a tunable filter 50' to the coupler 54 of a non-adjacent PON y, link 58B-1 receives the signal from a tunable filter 52' of PON y, and, correspondingly, link 58A-z carries the signal from splitter 56 via filter 52' to PON z, and link 58B-z feeds the signal from filter 50' of PON z to coupler 54. In such a network, all filters 50 and 50' are identical, and all filters 52 and 52' are identical.

In alternative embodiments, the filters 50' and 52' are replaced by filters in which each wavelength is selectively absorbed or passed instead of, as in filters 50 and 52, one wavelength of each pair being permanently absorbed.

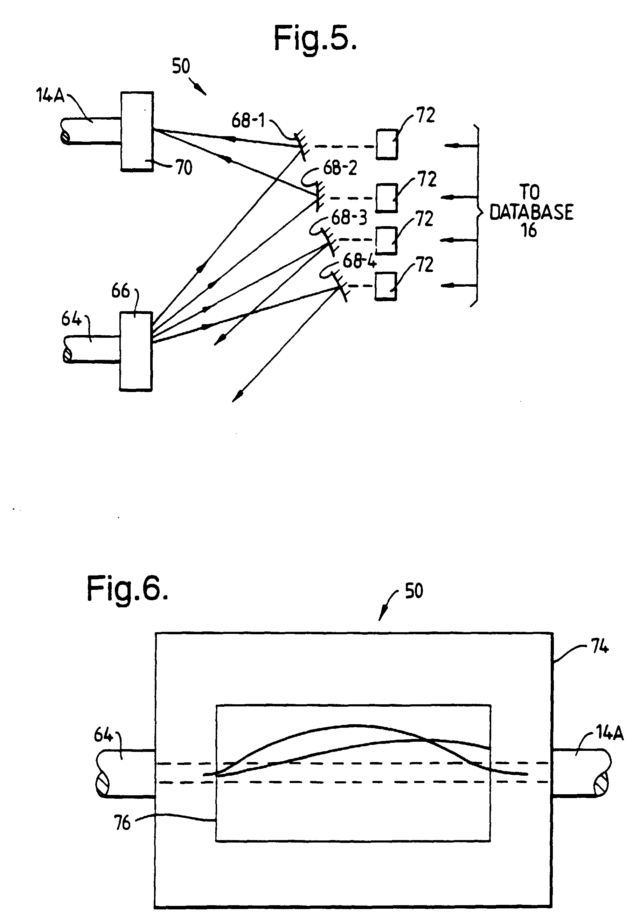

Referring now to Figure 5, which shows an electronically tunable wavelength filter 50 fabricated using bulk optics, there is shown an incoming optical fibre 64 (from splitter 44) optically coupled to a demultiplexer 66 (in the form of a Fabry Perot device) which disperses the input wavelengths such that each wavelength emerges from the demultiplexer 66 at a respective angle. Disposed in the path of the emergent wavelengths are respective movable mirrors 68-1 to 68-N (only four being shown), where N may be 200.

Each of the mirrors 68 is movable between a first stable position in which it reflects its input wavelength towards a multiplexer 70, which is optically coupled to the outgoing optical fibre 14A, and a second stable position in which it reflects its input wavelength away from the multiplexer 70. Each mirror has an associated actuator 72 which drives the mirror into the first position in response to an electrical signal representative of a logic one condition (On), and into the second position for a logic zero condition (Off).

The database 16 controls the filters 50 and 52 by sending logic signals to the respective actuators 72 to control which wavelengths are absorbed and which are not.

The filter proper may comprise a number of sections (not shown) each arranged to handle a respective group of the wavelengths used in the network, and in this case the sections will be coupled to the fibres 64 and 14A by respective splitters (not shown) and couplers (not shown).

In the filter of Figure 5 all the mirrors are tunable. In a variant for use with a network in which one wavelength of each pair is permanently absorbed, there is no need to provide any mirrors for these filtered wavelengths because they can be absorbed in any suitable manner.

In Figure 6, which shows one component of an alternative fabrication of the filter 50 using integrated optics, the fibre 64 is coupled (via a splitter, not shown) to the input of a silicon device 74 and the fibre 14A is coupled (via a coupler, not shown) to the output of the device 74. A central portion of device 74 comprises an electro-optical device 76 whose refractive index varies with an applied electrical signal. An InP-doped optical transmission path exists from the input of device 74, through the electro-optical device 76, to the output of device 74. Device 76 responds to an actuating electrical signal from database 16 to alter its value of refractive index and cause the wavelengths to follow respective curved paths from the input of device 76 to its output region, only one wavelength passing out of device 76, and out of device 74, while all other wavelengths are absorbed by device 76. In this case the actuating signal will be analogue in nature as opposed to the digital control required for the embodiment of Figure 5.

It will be understood that the more additional links that a network has, ranging from links which by-pass one PON up to links which by-pass many PONs (say, thirteen or even fifteen), the greater the likelihood of there being a low-hop path between a source and a destination PON. On the other hand, as the number of outputs increases on the output splitter (45, 56) there will be increased signal loss through a PON.

Where network 10 is an access network of a national communications network, there will be links from network 10 to the next hierarchical level, say the core network of the national network, and optical communication on such links will be in the window 1530nm to 1565nm and employ erbium doped fibre amplifiers (EDFAs) to compensate for loss of signal strength over the long run from the network 10 to its nearest core network switching node. In such a case, any communication over links 61 should not be in the EDFA window to keep this free for calls via the core network.

In greater detail, a call set-up request, also called a control packet, comprises four fields, the first contains the identity (address) of the destination terminal or node (26 bits), the second contains the bandwidth requested by the source terminal for the transmission (8 bits), the third contains the identity (address) of the source terminal or node (26 bits) and the fourth contains error checking or correction information and the time that the request was sent (40 bits). At a data transmission rate of about 2M bit/s this would be transmitted and received at the database in less than 10⁻⁴s.

If the database receives a call set-up request which is not corrupted by, for example, interference from another request, it transmits a modified request, also called a status packet, comprising four fields, the first containing the address of the destination terminal, the second containing the address of the source terminal, the third containing error checking or correction information, and the fourth containing the identities of the respective wavelengths to be used for the information transfer phase (ITP), and the time that the status packet was sent.

If for some reason, for example the destination terminal is already engaged in a call with another terminal, the database knows that the destination terminal is not free to accept a call request, it sends a status packet at λ₂ with the address of the source terminal in the first field. The source terminal will recognise that its own address is in both the source and destination fields and know that the database cannot send a status packet to the destination terminal at that time. With a sophisticated calling procedure the status packet could be sent to a busy destination terminal to generate, for example, a call waiting signal.

When the ITP has finished the source terminal will send a call shut-down request or packet to the database which responds by altering the entries in its records to the effect that the terminals are now free and not busy, that the two allocated wavelengths are available for use over any path not already in use at those wavelengths, and that all the tunable wavelength filters which had been under the control of the database to filter out one or other or both of the wavelengths for the call just finished can now be controlled to pass those wavelengths if required.

The pairs of optical links 14 of network 10 are formed of monomode fibre without EDFA, so for a call from network 10 via the core network, wavelengths will be chosen within the EDFA window of 1530nm to 1565nm, but local calls, i.e. those not involving the core network, use wavelengths outside this region.

Customers making local calls are allocated basic 2.048 Mbit/s channels at wavelengths less that 1530nm, and channels at about 10M bit/s at wavelengths greater than 1565nm.

In the above described embodiments, filters 50 and 52 on an optical link between adjacent PONs have been disposed at the transmitter end of the optical link. If desired, they could be disposed at the receiver end of the links, or at any convenient position along the links.

Instead of network 10 being serially connected in a ring as in Figure 1, it could be a fully or partially connected mesh network, in which case the filters should be fully tunable so that any of the possible paths between a source PON and a destination PON can be chosen, or it could be a bus network, which is effectively a broken ring.

In a variant the database allocates a single wavelength for communication between a source terminal, i.e. a terminal which requests a connection, and a destination terminal, and the source terminal employs a ranging and synchronisation protocol for establishing a two time slot time division multiplex communication between the terminals. The protocol would ensure that the receiver of the source terminal is inhibited during transmission from the source transmitter and at least until reception of the reflection of the source terminal transmission from the destination PON. In order for the destination terminal to use the same wavelength, filters 52 of the destination PON and any intermediate PONS are not controlled to block the wavelength transmitted from the source terminal, whereby the same wavelength transmitted from the destination terminal will pass through filters 52 and reach the source terminal.

In another variant one or more links incorporate a respective wavelength translator. The amount by which a translator shifts received wavelengths may be fixed or be controlled by the database. Translators may be used where it is desired to use a particular wavelength or wavelengths for a new call, but there will be wavelength contention or conflict on the transmission path for the new call. For example, there may be an existing conference call between many terminals using the particular wavelength(s) and a new terminal is to be added to the conference without changing the wavelength(s). The riewly added terminal can be controlled by the database to use the shifted wavelength(s), or the wavelength(s) shifted back by a further translator(s) after the signal has passed the wavelength contention part of the transmission path.

Whereas all the abovementioned links are optical fibre links, a network may include links between PONs which comprise non-optical paths and appropriate converters, for example a radio or satellite link.

Whereas the abovedescribed specific embodiment and variants relate to a telecommunications network in which the terminals are telephones, facsimile machines and the like, it will be appreciated that the network of the present invention is equally applicable for the transport of data between elements of data processing apparatus and the like where, for example, such elements are in the form of,for example, individual cards comprising respective electro-optical interfaces (optical transmitters and receivers) each constituting a terminal of the present invention. A plurality of the cards, say those of a shelf, can be grouped on a single PON, a plurality of such PONs in a large apparatus comprising several shelves being inter-connected for connections between any two terminals of the apparatus. Such an arrangement may be used in computing apparatus, database handling apparatus, and any apparatus where an optical interface (i.e. terminal) requires selective connection to another terminal, the nature of the information to be transmitted on the network being immaterial.

## Claims

1. An optical communications network comprising; a plurality of passive optical networks (PONs) (12) each having a plurality of optical terminals (28), and connection control means (16) for dynamically allocating a first wavelength for a wavelength multiplexed communication channel connection from a first of the optical terminals to a second of the optical terminals and for commanding the transmitter (29) of said first optical terminal and the receiver (31) of said second terminal to tune to said first wavelength; the network being characterised in that:-
at least some of the PONs (12) are directly connected to a respective plurality of neighbouring ones of the PONs (12) by respective bidirectional optical links (14) connected to respective inputs and outputs of the PONs (12);
each of the optical links (14) includes a respective selectively tunable wavelength blocker (50, 52) for each of the transmission directions of the link, each selectively tunable wavelength blocker (50, 52) being coupled to the connection control means and being responsive to a control signal from the connection control means to tune to the wavelength corresponding to the control signal and to block its transmission;
each PON is arranged to relay to the or each of its outputs optical signals received at an input and optical signals from its optical terminals;
and the connection control means is arranged to determine which one or more of the selectively tunable wavelength blockers (50, 52) is to be commanded to block said first wavelength in order to confine said first wavelength to a transmission path from the first optical terminal (28) to the second optical terminal (28), and to apply a first control signal corresponding to said first wavelength to the or each selectively tunable wavelength blocker (50, 52) so determined,

2. A network as claimed in Claim 1, wherein said connection control means 116) is arranged dynamically to allocate for a communication channel from said second optical terminal (28) to said first optical terminal (28), a second wavelength for transmission from said second optical terminal to said first optical terminal via said transmission path, and is arranged to determine further which one or more of the selectively tunable wavelength blockers (50, 52) is to be commanded to block said second wavelength in order to confine said second wavelength to said transmission path, and to apply a second control signal corresponding to said second wavelength to the or each selectively tunable wavelength blocker (50, 52) so further determined.

3. A network as claimed in Claim 2, wherein the PONs (12) are linked serially in address order, and the connection control means is arranged to apply continuously a first set of predetermined control signals to the respective selectively tunable wavelength blockers (50, 52) associated with transmission in the direction of increasing PON address such as to block continuously a first set of wavelengths, and arranged to apply continuously a second set of predetermined control signals to the respective selectively tunable wawelength blockers (50; 52) associated with transmission in the direction of decreasing PON address such as to block continuously a second set of wavelengths, whereby, in use, only the respective selectively tunable wavelength blocker (50, 52) associated with the transmission direction from a destination PON (12) to the or each of its neighbouring PONs (12) not associated with that connection is dynamically controlled to block the respective wavelength.

4. A network as claimed in Claim 3, wherein the connection control means (16) is arranged such that the wavelengths of said first set of wavelengths are spaced and alternate with the wavelengths of said second set of wavelengths.

5. A network as claimed in Claim 3, wherein the connection control means (16) is arranged such that the wavelengths of said first set of wavelengths are within a first band, and the wavelengths of said second set of wavelengths are within a second band.

6. A network as claimed in Claim 2, wherein the PONs (12) are linked serially in address order: the respective selectively tunable wavelength blockers (50, 52) associated with transmission in the direction of increasing PON address are responsive only to control signals corresponding to wavelengths to be allocated by the connection control means to terminals for transmission to PONs of lower address and are associated with first means for permanently blocking wavelengths to be allocated by the connection control means to terminals for transmission to PONs of higher address; and the respective selectively tunable wavelength blockers associated with transmission in the direction of decreasing PON address are responsive only to control signals corresponding to wavelengths to be allocated by the connection control means to terminals for transmission to PONs of higher address and are associated with second means for permanently blocking wavelengths to be allocated by the connection control means to terminals for transmission to PONs of lower address.

7. A network as claimed in Claim 6, wherein said first means for permanently blocking wavelengths is arranged to block wavelengths which are spaced and alternate with wavelengths which said second means for permanently blocking wavelengths is arranged to block.

8. A network as claimed in Claim 6, wherein said first means for permanently blocking wavelengths is arranged to block wavelengths within a first band, and said second means for permanently blocking wavelengths is arranged to block wavelengths within a second band.

9. A network as claimed in either Claim 5 or Claim 8, wherein the connection control means is arranged to allocate for each connection a pair of wavelengths, each pair being spaced by a constant amount.

10. A method of establishing communication between optical terminals (28) of a plurality of passive optical networks (PONs) (12), each optical terminal (28) having a respective tunable optical transmitter (29) and receiver (31) for providing wavelength multiplexed communication channels between terminals (28), the method comprising the steps of dynamically allocating a first wavelength for transmission from a first optical terminal to a second optical terminal for a first connection, and commanding the transmitter (29) of said first optical terminal and the receiver (31) of said second terminal to tune to said first wavelength, and the method being characterised by the prior steps of directly connecting at least some of the PONs (121 to a respective plurality of neighbouring ones of the PONs (12) by respective bidirectional optical links (14) connected to respective inputs and outputs of the PONs to form a network, providing each of the optical links with a respective selectively tunable wavelength blocker (50, 52) for each of the transmission directions of the link, and arranging each PON (12) to relay to the or each of its outputs optical signals received at an input and optical signals from its optical terminals, and the method being further characterised by the steps of determining which one or more of the selectively tunable wavelength blockers (50, 52) is to be commanded to block said first wavelength in order to confine said first wavelength to a transmission path from the first optical terminal to the second optical terminal, and applying a first control signal corresponding to said first wavelength to the or each selectively tunable wavelength blocker (50, 52) so determined.

11. A method as claimed in Claim 10, including the steps of dynamically allocating, for said first connection, a second wavelength for transmission from the second optical terminal (28) to the first optical terminal (28) , and further determining which one or more of the selectively tunable wavelength blockers (50, 52) is to be commanded to block said second wavelength in order to confine said second wavelength to said transmission path, and applying a second control signal corresponding to said second wavelength to the or each selectively tunable wavelength blocker (50, 52) so further determined.

12. A method as claimed in Claim 11, where the PONs are linked serially in address order, and including the steps of continuously blocking transmission from each PON (12) to the respective neighbouring PON (12) of lower address of one wavelength of said first and second allocated wavelengths, and continuously blocking transmission from each PON to the respective neighbouring PON of higher address of the other wavelength of said allocated wavelengths, and wherein the determining step determines, in respect of said one wavelength, the selectively tunable wavelength blocker (50, 52) associated with the transmission direction from the destination PON to its neighbouring PON of higher address, and, in respect of said other wavelength, the selectively tunable wavelength blocker (50, 52) associated with the transmission direction from the source PON to its neighbouring PON of lower address.

13. A method as claimed in Claim 12, wherein said continuously blocking steps comprise continuously applying a first set of predetermined control signals to the respective selectively tunable wavelength blockers (50, 52) associated with transmission in the direction of increasing PON address such as to block continuously a first set of wavelengths, and continuously applying a second set of predetermined control signals to the respective selectively tunable wavelength blockers (50, 52) associated with transmission in the direction of decreasing PON address such as to block continuously a second set of wavelengths, said first wavelength being a member of one of said sets of wavelengths and said second wavelength being a member of the other of said sets of wavelengths.

14. A method as claimed in any one of Claims 10 to 13, including dynamically allocating each further connection having a transmission path overlapping that of the first connection a respective different pair of transmission wavelengths.

15. A method as claimed in Claim 14, including spacing the lower wavelengths of the pairs by a predetermined difference, and correspondingly spacing the upper wavelengths of the pairs by the same predetermined difference.

16. A method as claimed in either Claim 14 or Claim 15, wherein each pair comprises adjacent wavelengths.

17. A method as claimed in either Claim 14 or Claim 15, including grouping all the lower wavelengths of the pairs in one group in wavelength order, and grouping all the upper wavelengths of the pairs in an adjacent group in wavelength order.

## Patentansprüche

1. Optisches Kommunikationsnetzwerk, das aufweist:
mehrere passive optische Netzwerke (PONs) (12), die jeweils mehrere optische Anschlüsse (28) und eine Verbindungssteuereinrichtung (16) zur dynamischen Zuordnung einer ersten Wellenlänge zur einer wellenlängenmäßig gemultiplexten Kommunikationskanalverbindung von einem ersten der optischen Anschlüsse zu einem zweiten der optischen Anschlüsse und zur Anweisung an den Sender (29) des ersten optischen Anschlusses und den Empfänger (31) des zweiten optischen Anschlusses aufweisen, um die erste Wellenlänge abzustimmen, und das
dadurch gekennzeichnet ist, daß
- mindestens einige der passiven optischen Netzwerke (PONs) (12) direkt mit entsprechenden mehreren benachbarten passiven optischen Netzwerken (PONs) (12) durch entsprechende bidirektionale optische Verbindungen (14) verbunden sind, die mit entsprechenden Eingängen und Ausgängen der passiven optischen Netzwerke (PONs) (12) verbunden sind,
- jede der optischen Verbindungen (14) einen entsprechenden selektiv abstimmbaren Wellenlängenblocker (50, 52) für jede Übertragungsrichtung der Verbindung umfaßt, wobei jeder selektiv abstimmbare Wellenlängenblocker (50, 52) mit der Verbindungssteuereinrichtung (16) gekoppelt ist und auf ein Steuersignal von der Verbindungssteuereinrichtung anspricht, um die Wellenlänge entsprechend dem Steuersignal abzustimmen und ihre Übertragung zu blockieren,
- jedes passive optische Netzwerk (PON) (12) so ausgebildet ist, daß es an den oder jeden seiner Ausgänge an einem Eingang erhaltene und von seinen optischen Anschlüssen erhaltene optische Signale weiterleitet, und
- die Verbindungssteuereinrichtung so ausgebildet ist, daß sie ermittelt, welcher oder welche mehreren der selektiv abstimmbaren Wellenlängenblocker (50, 52) anzuweisen sind, die erste Wellenlänge zu blockieren, um die erste Wellenlänge auf einen Übertragungsweg vom ersten optischen Anschluß (28) zum zweiten optischen Anschluß (28) zu begrenzen und ein der ersten Wellenlänge entsprechendes erstes Steuersignal an den oder jeden auf diese Weise bestimmten selektiv abstimmbaren Wellenlängenblocker (50, 52) anzulegen.

2. Netzwerk nach Anspruch 1, bei dem die Verbindungssteuereinrichtung (16) so dynamisch ausgebildet ist, daß sie für einen Kommunikationskanal vom zweiten optischen Anschluß (28) zum ersten optischen Anschluß (28) eine zweite Wellenlänge zur Übertragung vom zweiten optischen Anschluß zum ersten optischen Anschluß über diesen Übertragungsweg zuordnet, und
daß sie ferner ermittelt, welcher oder welche mehreren der selektiv abstimmbaren Wellenlängenblocker (50, 52) anzuweisen sind, die zweite Wellenlänge zu blockieren, um sie auf diesen Übertragungsweg zu begrenzen, und
daß ein der zweiten Wellenlänge entsprechendes zweites Steuersignal an den oder jeden der auf diese Weise ferner bestimmten selektiv abstimmbaren Wellenlängenblocker (50, 52) angelegt wird.

3. Netzwerk nach Anspruch 2, bei dem die passiven optischen Netzwerke (PONs) (12) in der Reihenfolge der Adressen seriell verknüpft sind, und die Verbindungssteuereinrichtung so ausgebildet ist, daß kontinuierlich ein erster Satz vorgegebener Steuersignale an die entsprechenden selektiv abstimmbaren Wellenlängenblocker (50, 52), die der Übertragung in Richtung aufsteigender PON-Adressen zugeordnet sind, so angelegt wird, daß kontinuierlich ein erster Satz von Wellenlängen blockiert wird, und daß kontinuierlich ein zweiter Satz vorgegebener Steuersignale an die entsprechenden selektiv abstimmbaren Wellenlängenblokker (50, 52), die der Übertragung in Richtung fallender PON-Adressen zugeordnet sind, so angelegt wird, daß kontinuierlich ein zweiter Satz von Wellenlängen blockiert wird, wodurch im Betrieb nur der entsprechende selektiv abstimmbare Wellenlängenblocker (50, 52), welcher der Übertragungsrichtung von einem einer Zieladresse zugeordneten passiven optischen Netzwerk (PON) (12) zu dem oder zu jedem benachbarten passiven optischen Netzwerk zugeordnet ist, das nicht dieser Verbindung zugeordnet ist, dynamisch gesteuert wird, um die entsprechende Wellenlänge zu blockieren.

4. Netzwerk nach Anspruch 3, bei dem die Verbindungssteuereinrichtung (16) so ausgebildet ist, daß die Wellenlängen des ersten Satzes von Wellenlängen voneinander beabstandet sind und mit den Wellenlängen des zweiten Satzes von Wellenlängen abwechseln.

5. Netzwerk nach Anspruch 3, bei dem die Verbindungssteuereinrichtung (16) so ausgebildet ist, daß die Wellenlängen des ersten Satzes von Wellenlängen innerhalb eines ersten Bandes und die Wellenlängen des zweiten Satzes von Wellenlängen innerhalb eines zweiten Bandes liegen.

6. Netzwerk nach Anspruch 2, bei dem die passiven optischen Netzwerke (PONs) (12) in der Reihenfolge der Adressen seriell verknüft sind, die entsprechenden selektiv abstimmbaren Wellenlängenblocker (50, 52), die mit einer Übertragung in Richtung ansteigender PON-Adressen zugeordnet sind, nur auf Steuersignale ansprechen, die Wellenlängen entsprechen, die durch die Verbindungssteuereinrichtung den Anschlüssen für die Übertragung von passiven optischen Netzwerken (PONs) (12) einer niedrigeren Adresse zugeordnet sind, und mit einer ersten Einrichtung zur dauernd Blockierung von Wellenlängen verbunden sind, die durch die Verbindungssteuereinrichtung Anschlüssen für die Übertragung von passiven optischen Netzwerken PONs (12) einer höheren Adresse zugeordnet sind, und die entsprechenden selektiv abstimmbaren Wellenlängenblocker (50, 52), die der Übertragung in Richtung fallender PON-Adressen zugeordnet sind, nur auf Steuersignale ansprechen, die Wellenlängen entsprechen, die durch die Verbindungssteuereinrichtung Anschlüssen für die Übertragung von passiven optischen Netzwerken PONs (12) einer höheren Adresse zuzuordnen sind, und mit einer zweiten Einrichtung für eine dauernde Blockierung von Wellenlängen verbunden sind, die durch die Verbindungssteuereinrichtung Anschlüssen für die Übertragung von von passiven optischen Netzwerken PONs (12) einer niedrigeren Adresse zuzuordnen sind.

7. Netzwerk nach Anspruch 6, bei dem die erste Einrichtung zur dauernden Blockierung von Wellenlängen so ausgebildet ist, daß sie Wellenlängen blockiert, die voneinander beabstandet sind und mit Wellenlängen abwechseln, für deren dauernde Blockierung die zweite Einrichtung ausgebildet ist.

8. Netzwerk nach Anspruch 6, bei dem die erste Einrichtung zur dauernden Blockierung von Wellenlängen so ausgebildet ist, daß sie Wellenlängen innerhalb eines ersten Bandes blockiert, und daß die zweite Einrichtung zur dauernden Blockierung von Wellenlängen so ausgebildet ist, daß sie Wellenlängen innerhalb eines zweiten Bandes blokkiert.

9. Netzwerk nach Anspruch 5 oder 8, bei dem die Verbindungssteuereinrichtung so ausgebildet ist, daß sie für jede Verbindung zwei Wellenlängen zuordnet, wobei jedes Paar um einen konstanten Betrag voneinander beabstandet ist.

10. Verfahren zur Herstellung einer Kommunikation zwischen optischen Anschlüssen (28) mehrerer passiver optischer Netzwerke (PONs) (12), wobei jeder optische Anschluß (28) einen entsprechenden abstimmbaren optischen Sender (29) und Empfänger (31) zum Vorsehen von wellenlängenmäßig gemultiplexten Kommunikationskanälen für mehrere Wellenlängen zwischen den Anschlüssen (28) aufweist, und das Verfahren folgende Schritte umfaßt:
- dynamische Zuordnung einer ersten Wellenlänge zur Übertragung von einem ersten optischen Anschluß zu einem zweiten optischen Anschluß für eine erste Verbindung und
- Anweisung an den Sender (29) des ersten optischen Anschlusses und den Empfänger (31) des zweiten optischen Anschlusses zur Abstimmung auf die erste Wellenlänge, wobei das Verfahren dadurch gekennzeichnet ist, daß zunächst folgende Schritte durchgeführt werden:
- direktes Verbinden mindestens einiger der passiven optischen Netzwerke (PONs) (12) mit mehreren entsprechenden benachbarten passiven optischen Netzwerken (PONs) (12) durch entsprechende bidirektionale optische Verbindungen (14), die mit den entsprechenden Eingängen und Ausgängen der passiven optischen Netzwerke (PONs) (12) unter Bildung eines Netzwerkes verbunden sind,
- Ausstatten jeder optischen Verbindung (14) mit einem entsprechenden selektiv abstimmbaren Wellenlängenblocker (50, 52) für jede Übertragungsrichtung der Verbindung und
- Ausbilden jedes passiven optischen Netzwerks (PON) (12) derart, daß die an einem Eingang erhaltenen optischen Signale und die optischen Signale von ihren optischen Anschlüssen an den oder jeden Ausgang weiterleitet werden, und das Verfahren ferner durch folgende Schritte gekennzeichnet ist:
- Bestimmen, welcher oder welche mehreren der selektiv abstimmbaren Wellenlängenblocker (50, 52) anzuweisen sind, die erste Wellenlänge zu blockieren, um die erste Wellenlänge auf einen Übertragungsweg vom ersten optischen Anschluß zum zweiten optischen Anschluß zu begrenzen, und
- Anlegen eines ersten Steuersignals, das der ersten Wellenlänge entspricht, an den oder jeden auf diese Weise bestimmten selektiv abstimmbaren Wellenlängenblocker (50, 52).

11. Verfahren nach Anspruch 10, das die folgenden Schritte umfaßt:
- dynamische Zuordnung einer zweiten Wellenlänge zur ersten Verbindung zur Übertragung vom zweiten optischen Anschluß (28) zum ersten optischen Anschluß (28) und ferner
- Bestimmung, welcher oder welche mehreren der selektiv abstimmbaren Wellenlängenblocker (50, 52) anzuweisen ist, die zweite Wellenlänge zu blockieren, um die zweite Wellenlänge auf den Übertragungsweg zu begrenzen, und
- Anlegung eines zweiten Steuersignals, das der zweiten Wellenlänge entspricht, an den oder jeden auf diese Weise ferner bestimmten selektiv abstimmbaren Wellenlängenblokker (50, 52).

12. Verfahren nach Anspruch 11, bei dem die passiven optischen Netzwerke (PONs) (12) in der Reihenfolge der Adressen seriell miteinander verknüpft sind, und das die folgenden Schritte umfaßt:
- kontinuierliche Blockierung der Übertragung einer Wellenlänge der ersten und zweiten zugeordneten Wellenlänge von jedem passiven optischen Netzwerk (PON) (12) zum entsprechenden benachbarten passiven optischen Netzwerk (PON) (12) mit einer niedrigeren Adresse und
- kontinuierliche Blockierung der Übertragung der anderen Wellenlänge der zugeordneten Wellenlängen von jedem passiven optischen Netzwerk (PON) zum entsprechenden benachbarten passiven optischen Netzwerk (PON) mit einer höheren Adresse,
wobei im Bestimmungsschritt hinsichtlich der einen Wellenlänge der selektiv abstimmbare Wellenlängenblocker (50, 52), welcher der Übertragungsrichtung vom Zieladressen-PON zu seinem benachbarten PON mit einer höheren Adresse zugeordnet ist, und hinsichtlich der anderen Wellenlänge der selektiv abstimmbare Wellenlängenblocker (50, 52), welcher der Übertragungsrichtung vom Quellenadressen-PON zu seinem benachbarten PON mit einer niedrigeren Adresse zugeordnet ist, bestimmt werden.

13. Verfahren nach Anspruch 12, bei dem die kontinuierlichen Blockierungsschritte folgende Schritte sind:
- kontinuierliches Anlegen eines ersten Satzes vorgegebener Steuersignale an die entsprechenden selektiv abstimmbaren Wellenlängenblocker (50, 52), die der Übertragung in Richtung ansteigender PON-Adressen zugeordnet sind, um einen ersten Satz von Wellenlängen kontinuierlich zu blokkieren, und
- kontinuierliches Anlegen eines zweiten Satzes vorgegebener Steuersignale an die entsprechenden selektiv abstimmbaren Wellenlängenblocker (50, 52), die der Übertragung in Richtung fallender PON-Adressen zugeordnet sind, um einen zweiten Satz von Wellenlängen kontinuierlich zu blockieren, wobei die erste Wellenlänge zum einen Satz von Wellenlängen und die zweite Wellenlänge zum anderen Satz von Wellenlängen gehören.

14. Verfahren nach einem der Ansprüche 10 bis 13, das eine dynamische Zuordnung jeder weiteren Verbindung umfaßt, die einen Übertragungsweg aufweist, der den Übertragungsweg der ersten Verbindung von zwei entsprechenden unterschiedlichen Übertragungswellenlängen überlappt.

15. Verfahren nach Anspruch 14, das ein Beabstanden der niedrigeren Wellenlängen der Paare von Übertragungswellenlängen um eine vorgegebene Differenz und ein entsprechendes Beabstanden der höheren Wellenlängen der Paare von Übertragungswellenlängen um die gleiche vorgegebene Differenz umfaßt.

16. Verfahren nach Anspruch 14 oder 15, wobei jedes Paar von Übertragungswellenlängen benachbarte Wellenlängen darstellt.

17. Verfahren nach Anspruch 14 oder 15, das ein Gruppieren aller kleineren Wellenlängen der Paare von Übertragungswellenlängen in einer Gruppe in der Reihenfolge der Wellenlängen und aller größeren Wellenlängen der Paare von Übertragungswellenlängen in einer benachbarten Gruppe in der Reihenfolge der Wellenlängen umfaßt.

## Revendications

1. Réseau de communications optique comprenant : une pluralité de réseaux optiques passifs (PON) (12) comportant chacun une pluralité de terminaux optiques (28), et un moyen de commande de connexion (16) destiné à allouer dynamiquement une première longueur d'onde pour une connexion sur un canal de communications multiplexé en longueur d'onde entre un premier des terminaux optiques et un second des terminaux optiques et destiné à commander l'émetteur (29) dudit premier terminal optique et le récepteur (31) dudit second terminal pour qu'ils s'accordent sur ladite première longueur d'onde, le réseau étant caractérisé en ce que :
au moins certains des réseaux PON (12) sont directement reliés à une pluralité respective de réseaux voisins parmi les réseaux PON (12) par des liaisons optiques bidirectionnelles respectives (14) reliées à des entrées et des sorties respectives des réseaux PON (12),
chacune des liaisons optiques (14) comprend un module de blocage de longueur d'onde accordable sélectivement respectif (50, 52) pour chacun des sens de transmission de la liaison, chaque module de blocage à longueur d'onde accordable sélectivement (50, 52) étant couplé au moyen de commande de connexion et étant sensible à un signal de commande provenant du moyen de commande de connexion afin de s'accorder sur la longueur d'onde correspondant au signal de commande et de bloquer sa transmission,
chaque réseau PON est agencé pour relayer vers la ou chacune de ses sorties des signaux optiques reçus au niveau d'une entrée et des signaux optiques provenant de ses terminaux optiques,
et le moyen de commande de connexion est agencé pour déterminer lequel ou plusieurs des modules de blocage à longueur d'onde accordables sélectivement (50, 52) doit être commandé pour bloquer ladite première longueur d'onde de manière à confiner ladite première longueur d'onde à une voie de transmission entre le premier terminal optique (28) et le second terminal optique (28), et pour appliquer un premier signal de commande correspondant à ladite première longueur d'onde au module ou à chaque module de blocage à longueur d'onde accordable sélectivement (50, 52) ainsi déterminé.

2. Réseau selon la revendication 1, dans lequel ledit moyen de commande de connexion (16) est agencé pour allouer dynamiquement à un canal de communications entre ledit second terminal optique (28) et ledit premier terminal optique (28), une seconde longueur d'onde pour la transmission entre ledit second terminal optique et ledit premier terminal optique par l'intermédiaire de ladite voie de transmission, et est agencé pour déterminer en outre lequel ou plusieurs des modules de blocage à longueur d'onde accordables sélectivement (50, 52) doit être commandé pour bloquer ladite seconde longueur d'onde de manière à confiner ladite seconde longueur d'onde à ladite voie de transmission, et pour appliquer un second signal de commande correspondant à ladite seconde longueur d'onde au module ou à chaque module de blocage de longueur d'onde accordable sélectivement (50, 52) ainsi déterminé en outre.

3. Réseau selon la revendication 2, dans lequel les réseaux PON (12) sont reliés en série dans l'ordre des adresses, et le moyen de commande de connexion est agencé pour appliquer en permanence un premier ensemble de signaux de commande prédéterminés aux modules de blocage de longueur d'onde accordables sélectivement (50, 52) associés à la transmission dans le sens des adresses de réseau PON croissantes de façon à bloquer en permanence un premier ensemble de longueurs d'onde, et agencé pour appliquer en permanence un second ensemble de signaux de commande prédéterminés aux modules de blocage de longueur d'onde accordables sélectivement (50, 52) respectifs associés à une transmission dans le sens des adresses de réseau PON décroissantes de façon à bloquer en permanence un second ensemble de longueurs d'onde, d'où il résulte qu'en utilisation, seul le module de blocage à longueur d'onde accordable sélectivement respectif (50, 52) associé au sens de transmission entre un réseau PON de destination (12) et le réseau ou chaque réseau parmi ses réseaux PON voisins (12) non associé à cette connexion est commandé dynamiquement pour bloquer la longueur d'onde respective.

4. Réseau selon la revendication 3, dans lequel le moyen de commande de connexion (16) est agencé de manière à ce que les longueurs d'onde dudit premier ensemble de longueurs d'onde soient espacées et alternent avec les longueurs d'onde dudit second ensemble de longueurs d'onde.

5. Réseau selon la revendication 3, dans lequel le moyen de commande de connexion (16) est agencé de telle sorte que les longueurs d'onde dudit premier ensemble de longueurs d'onde soient à l'intérieur d'une première bande, et que les longueurs d'onde dudit second ensemble de longueurs d'onde soient à l'intérieur d'une seconde bande.

6. Réseau selon la revendication 2, dans lequel les réseaux PON (12) sont reliés en série dans l'ordre des adresses, les modules de blocage à longueur d'onde accordables sélectivement respectifs (50, 52) associés à une transmission dans le sens des adresses de réseau PON croissantes ne sont sensibles qu'à des signaux de commande correspondant à des longueurs d'onde devant être allouées par le moyen de commande de connexion à des terminaux pour une transmission vers des réseaux PON d'adresse inférieure et sont associés à un premier moyen destiné à bloquer en permanence des longueurs d'onde devant être allouées par le moyen de commande de connexion à des terminaux pour une transmission vers des réseaux PON d'adresse supérieure, et les modules de blocage à longueur d'onde accordables sélectivement respectifs associés à une transmission dans le sens des adresses de réseau PON décroissantes ne répondent qu'à des signaux de commande correspondant à des longueurs d'onde devant être allouées par le moyen de commande de connexion à des terminaux pour une transmission vers des réseaux PON d'adresse supérieure et sont associés à un second moyen destiné à bloquer en permanence des longueurs d'onde devant être allouées par le moyen de commande de connexion à des terminaux pour une transmission vers des réseaux PON d'adresse inférieure.

7. Réseau selon la revendication 6, dans lequel ledit premier moyen destiné à bloquer en permanence des longueurs d'onde est agencé pour bloquer des longueurs d'onde qui sont espacées et alternent avec des longueurs d'onde que ledit second moyen destiné à bloquer en permanence des longueurs d'onde est prévu bloquer.

8. Réseau selon la revendication 6, dans lequel ledit premier moyen destiné à bloquer en permanence des longueurs d'onde est agencé pour bloquer des longueurs d'onde à l'intérieur d'une première bande, et ledit second moyen destiné à bloquer en permanence des longueurs d'onde est agencé pour bloquer des longueurs d'onde à l'intérieur d'une seconde bande.

9. Réseau selon soit la revendication 5, soit la revendication 8, dans lequel le moyen de commande de connexion est agencé pour allouer pour chaque connexion une paire de longueurs d'onde, chaque paire étant espacée d'une valeur constante.

10. Procédé destiné à établir une communication entre des terminaux optiques (28) d'une pluralité de réseaux optiques passifs (PON) (12), chaque terminal optique (28) comportant un émetteur (29) et un récepteur (31) optiques accordables respectifs destinés à fournir des canaux de communications multiplexés en longueur d'onde entre des terminaux (28), le procédé comprenant les étapes consistant à allouer dynamiquement une première longueur d'onde pour une transmission entre un premier terminal optique et un second terminal optique pour une première connexion, et à commander l'émetteur (29) dudit premier terminal optique et le récepteur (31) dudit second terminal pour qu'ils s'accordent sur ladite première longueur d'onde, et le procédé étant caractérisé par les étapes antérieures consistant à connecter directement au moins certains des réseaux PON (12) à une pluralité respective de réseaux voisins parmi les réseaux PON (12) par des liaisons optiques bidirectionnelles respectives (14) reliées à des entrées et des sorties respectives des réseaux PON afin de former un réseau, à munir chacune des liaisons optiques d'un module de blocage à longueur d'onde accordable sélectivement respectif (50, 52) pour chacun des sens de transmission de la liaison, et agencer chaque réseau PON (12) pour qu'il relaie vers la sortie ou chacune de ses sorties, des signaux optiques reçus au niveau d'une entrée et des signaux optiques provenant de ses terminaux optiques, et le procédé étant en outre caractérisé par les étapes consistant à déterminer quel module ou plusieurs des modules de blocage à longueur d'onde accordables sélectivement (50, 52) doit être commandé pour bloquer ladite première longueur d'onde de manière à confiner ladite première longueur d'onde à une voie de transmission entre le premier terminal optique et le second terminal optique, et à appliquer un premier signal de commande correspondant à ladite première longueur d'onde au module ou à chaque module de blocage à longueur d'onde accordable sélectivement (50, 52) ainsi déterminé.

11. Procédé selon la revendication 10, comprenant les étapes consistant à allouer dynamiquement, pour ladite première connexion, une seconde longueur d'onde pour la transmission depuis le second terminal optique (28) vers le premier terminal optique (28), et à déterminer en outre quel module ou plusieurs des modules de blocage de longueur d'onde accordables sélectivement (50, 52) doit être commandé pour bloquer ladite seconde longueur d'onde de manière à confiner ladite seconde longueur d'onde à ladite voie de transmission, et à appliquer un second signal de commande correspondant à ladite seconde longueur d'onde au module ou à chaque module de blocage de longueur d'onde accordable sélectivement (50, 52) ainsi déterminé en outre.

12. Procédé selon la revendication 11, où les réseaux PON sont reliés en série dans l'ordre des adresses, et comprenant les étapes consistant à bloquer en permanence une transmission entre chaque réseau PON (12) et le réseau PON voisin respectif (12) d'adresse inférieure, d'une longueur d'onde desdites première et seconde longueurs d'onde allouées, et à bloquer en permanence la transmission entre chaque réseau PON et le réseau PON voisin respectif d'adresse supérieure de l'autre longueur d'onde parmi lesdites longueurs d'onde allouées, et dans lequel l'étape de détermination détermine, en fonction de ladite première longueur d'onde, le module de blocage à longueur d'onde accordable sélectivement (50, 52) associé au sens de transmission entre le réseau PON de destination et son réseau PON voisin d'adresse supérieure, et, en fonction de ladite autre longueur d'onde, le module de blocage à longueur d'onde accordable sélectivement (50, 52) associé au sens de transmission entre le réseau PON source et son réseau PON voisin d'adresse inférieure.

13. Procédé selon la revendication 12, dans lequel lesdites étapes de blocage en permanence comprennent l'application en permanence d'un premier ensemble de signaux de commande prédéterminés aux modules de blocage à longueur d'onde accordables sélectivement respectifs (50, 52) associés à une transmission dans le sens des adresses de réseau PON croissantes de façon à bloquer en permanence un premier ensemble de longueurs d'onde, et l'application permanente d'un second ensemble de signaux de commande prédéterminés aux modules de blocage de longueur d'onde accordables sélectivement respectifs (50, 52) associés à une transmission dans le sens des adresses de réseau PON décroissantes de façon à bloquer en permanence un second ensemble de longueurs d'onde, ladite première longueur d'onde étant un élément de l'un desdits ensembles de longueurs d'onde et ladite seconde longueur d'onde étant un élément de l'autre desdits ensembles de longueurs d'onde.

14. Procédé selon l'une quelconque des revendications 10 à 13, comprenant l'allocation dynamique à chaque connexion supplémentaire comportant une voie de transmission chevauchant celle de la première connexion, d'une paire différente respective de longueurs d'onde de transmission.

15. Procédé selon la revendication 14, comprenant l'espacement des longueurs d'onde inférieures des paires par une différence prédéterminée, et l'espacement correspondant des longueurs d'onde supérieures des paires de la même différence prédéterminée.

16. Procédé selon l'une ou l'autre de la revendication 14 ou de la revendication 15, dans lequel chaque paire comprend des longueurs d'onde adjacentes.

17. Procédé selon soit la revendication 14, soit la revendication 15, comprenant le regroupement de toutes les longueurs d'onde inférieures des paires en un groupe d'ordre de longueurs d'onde, et le regroupement de toutes les longueurs d'onde supérieures des paires en un groupe adjacent d'ordre de longueurs d'onde.
